# EUROPEAN PATENT APPLICATION

(11) **EP 3 822 896 A1**
(43) Date of publication of application: **19.05.2021**
(21) Application number: 20206422.6
(22) Date of filing: 09.11.2020
(51) Int. Cl.: G06Q 30/00, G06Q 30/02

(54) **A METHOD FOR TRIGGERING AN ACTION IN AN ELECTRONIC DEVICE BASED ON A SOUND PRODUCED BY A FOOD PACKAGE AND AN APPARATUS THEREOF**

(30) Priority: 12.11.2019 EP 19208555
(71) Applicant: Tetra Laval Holdings & Finance S.A., 1009 Pully (CH)
(72) Inventor: Lukichev, Denis, 222 40 Lund (SE); Danilin, Alexey, Krasnoyarsk (RU); Sigala, Maria, Athens (GR); Eggink, Govert, 3971ED Driebergen (NL); Firkowski, Dawid, 02-393 Warsaw (PL); Sommarmo, Anders, 214 21 Malmö (SE)
(74) Representative: Tetra Pak - Patent Attorneys SE

(57) **Abstract**

A method (500) for triggering an action in an electronic device (324) based on a sound produced by a package, such as a food package (100, 302), is presented. The method comprises capturing (502) audio data (306) related to the sound by using a microphone (310), wherein the step of capturing (502) the audio data is initiated by a trigger signal (404), wherein said trigger signal (404) is effected based on input from an external device (402), such as a refrigerator, and/or a position of the electronic device (324), comparing (504) the audio data (306) with a reference pattern (316) by using a processor (312) and a memory (314), in case of match between the audio data (306) and the reference pattern (316), identifying (506) an action associated to the reference pattern (316), and performing (508) the action in the electronic device (324).

## Description

### Technical Field

The invention generally relates to the field of food packaging technology. More specifically, it is related to a method for triggering an action in an electronic device based on a sound produced by a food package, an apparatus for triggering the action in the electronic device, and a computer program product.

### Background Art

To provide food safe and available throughout the world, different food packages have been developed. A food package of today is designed to protect a food product held inside the package from germs and other microorganisms as well as to meet logistical challenges. Examples of such challenges are to design the food package such that several layers of food packages can be stacked on top of each other and that the food packages can be loaded on a pallet such that efficient transportation is made possible. For liquid food products, carton packages, such as Tetra Brik™ marketed by Tetra Pak, meet these challenges and are commonly used.

Since food is part of every person's daily life, the food packages are also part of most persons daily life. To provide information about the product held inside the food package, text and images presenting the product are provided on the package. Such information may be required for legal reasons, but it may also be used for marketing purposes. In addition to the text and the images on the package, for the consumer to know when the product is produced and/or a best before date for consuming the product, this information is usually also provided on the food package.

To provide further information about the product, it has been presented solutions where a two-dimensional code is provided on the food package. By scanning this code with a smart phone equipped with a camera and software for reading two-dimensional codes, the consumer can gain access via e.g. a web site to further information about the product and/or a company producing the product. An advantage with using the two-dimensional code, which may be a QR code, is that the information may be provided in a larger variety of formats. For instance, by using the two-dimensional code in combination with the smart phone it is possible to present a video about the product to the consumer.

Using the two-dimensional codes comes with a number of advantages, but it requires, as technology stands today, that the consumer actively chooses to scan the code. This effort, even though being small, may result in that some consumers refrain from using the two-dimensional codes, which in turn provides less incentive for food producers to provide the two-dimensional codes on the package. This especially holds true if unique two-dimensional codes are to be used, since such codes come with extra costs.

Therefore, even though there are solutions for how information about the product can be provided to the consumer, there is a need for other types of solutions which can appeal to a larger or different group of consumers.

### Summary

It is an object of the invention to at least partly overcome one or more of the above-identified limitations of the prior art. In particular, it is an object to provide that information about a food package and/or product held in the package is intuitively communicated to the consumer. Improved communication between the package and the consumer will however not only be restricted to that information may be sent conveniently from the package to the consumer, but also that valuable feedback may be provided to a package producer. Further, even though presented in a context of food packages, the concepts described herein are not restricted to such packages, but can be used for packages in general.

According to a first aspect it is provided a method for triggering an action in an electronic device based on a sound produced by a package, such as a food package, said method comprising capturing audio data related to the sound by using a microphone, wherein the step of capturing the audio data is initiated by a trigger signal, wherein said trigger signal is effected based on input from an external device, such as a refrigerator, and/or a position of the electronic device, comparing the audio data with a reference pattern by using a processor and a memory, in case of match between the audio data and the reference pattern, identifying an action associated to the reference pattern, and performing the action in the electronic device.

An advantage with using the sound in this way is that the action can be triggered without requiring any extra steps from the user. In this way an intuitive and user friendly solution can be achieved.

An advantage of having the capturing of audio initiated by the trigger signal is that the apparatus and/or electronic device used for capturing the audio data can be switched off when a likelihood that the package is opened is low, such that battery power can be saved.

In addition or instead of the input from the external device and/or the position of the electronic device, the trigger signal may be effected based on a movement of the electronic device, e.g. based on data output from an accelerometer in the electronic device, and/or by user input, explicit or implicit, that may be set based on user settings.

The sound may be related to opening the food package for a first time such that a tamper evidence ring is separated from a cap.

An advantage with using the sound related to opening the food package for the first time is that this step can be important from a food safety perspective. Breaking a barrier that is shielding the product from surrounding air may have an effect on the product, which in turn makes it advantageous to identify this.

The sound may be related to opening the food package for the first time such that a laminate layer of a packaging material of the food package is torn.

Opening the package for the first time may also be related to tearing or cutting the laminate layer or laminate layers. As above, detecting that the package is opened for the first time is advantageous from a food safety perspective. Having the sound comprising both a first sound related to separating the tamper evidence ring from the cap and a second sound related to tearing the laminate layer will provide for that the sound can be reliably distinguished from other sounds.

Other options are e.g. to have the sound related to opening a straw bag or removing a straw bag, glued onto the package, from the package.

The step of performing the action may comprise transmitting a request to scan the food package such that an identity of the food package can be established.

An advantage with transmitting such request is that when the sound is detected, the consumer may be requested, e.g. via his or her smart phone, to scan a QR code on the package such that the package itself as well as the product held inside can be linked to a time of opening the package. This may be advantageous in that e.g. dynamic best before date can be provided to the consumer e.g. as outlined below.

The step of performing an action may further comprise establishing a time of opening the package based on time data associated to the audio data, receiving visual identification data related to the food package, establishing a package identity based on the visual identification data, determining package properties and food properties of a food product held in the food package using the package identity, and determining a last day for consumption of the food product based on the food properties, package properties and the time of opening.

The sound may be produced by shaking the food package such that the food product held inside the food package is moved around within the package, and said step of performing the action comprises determining a total volume of the food package based on the audio data, and determining a food product volume held inside the food package based on the audio data.

An advantage of using that the sound of shaking the package will be different depending on how much product that is left in the package is that no measuring cups is needed for determining how much product that is left.

According to a second aspect it is provided an apparatus for triggering an action based on a sound produced by a package, such as a food package, said apparatus comprising a microphone arranged to capture audio data related to the sound, a server configured to store a reference pattern, a processor and a memory configured to receive a trigger signal and, based upon reception of the trigger signal, activate the microphone such that the audio data is captured, wherein said trigger signal is effected based on input from an external device, such as a refrigerator, and/or a position of the electronic device, compare the audio data with the reference pattern, identify an action associated to the reference pattern, and instruct the electronic device to perform the action.

The same advantages that are laid forward with respect to the first aspect also apply to this second aspect.

The sound may be related to opening the food package for a first time such that a tamper evidence ring is separated from a cap.

The sound may be related to opening the food package for the first time such that a laminate layer of a packaging material of the food package is torn.

The action may comprise transmitting a request to scan the food package such that an identity of the food package can be established.

The processor and the memory may be further configured to establish a time of opening the package based on time data associated to the audio data, receive visual identification data related to the food package, establish a package identity based on the visual identification data, determine package properties and food properties of a food product held in the food package using the package identity, and determine a last day for consumption of the food product based on the food properties, package properties and the time of opening.

The sound may be produced by shaking the food package such that the food product held inside the food package is moved around within the package, and the action comprises determining a total volume of the food package based on the audio data, and determining a food product volume held inside the food package based on the audio data.

According to a third aspect it is provided a computer program product comprising instructions which, when executed on a computer, cause the computer to carry out the method according to the first aspect.

According to fourth aspect it is provided a method for triggering an action in an electronic device based on a sound produced by a package, such as a food package, said method comprising capturing audio data related to the sound by using a microphone, comparing the audio data with a reference pattern by using a processor and a memory, in case of match between the audio data and the reference pattern, identifying an action associated to the reference pattern, and performing the action in the electronic device.

According to a fifth aspect it is provided an apparatus for triggering an action based on a sound produced by a package, such as a food package, said apparatus comprising a microphone arranged to capture audio data related to the sound, a server configured to store a reference pattern, a processor and a memory configured to receive a trigger signal and, based upon reception of the trigger signal, activate the microphone such that the audio data is captured, compare the audio data with the reference pattern, identify an action associated to the reference pattern, and instruct the electronic device to perform the action.

The different features and advantages described in relation to the first to third aspects above also apply to the fourth and fifth aspects.

Still other objectives, features, aspects and advantages of the invention will appear from the following detailed description as well as from the drawings.

### Brief Description of the Drawings

Embodiments of the invention will now be described, by way of example, with reference to the accompanying schematic drawings, in which
Fig. 1 is a cross-sectional view of an upper section of a package provided with a tamper evidence ring.
Fig. 2A and 2B illustrate an opening device for an aseptic carton package and a pre-laminated hole, respectively.
Fig. 3A-3D illustrate different embodiments of a system made to capture package produced audio data and link this to an action.
Fig. 4 illustrates a system comprising an external device, such as a refrigerator, triggering the step of capturing audio data.
Fig. 5 is a flow chart that illustrates a method for triggering an action in an electronic device.

### Detailed description

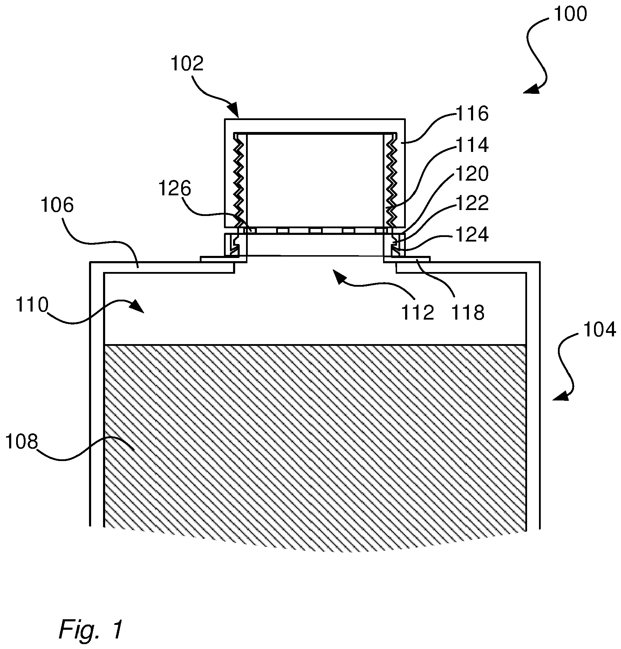

As illustrated by way of example in fig. 1, a food package 100 for liquid food products can be provided with an opening device 102 in the form of a screw cap. The opening device 102 can, as illustrated, be connected to a main body 104, that may be formed by a packaging material 106 comprising at least one carton layer and at least one laminate layer, e.g. a plastic layer. Inside the main body 104, a product 108, such as milk or juice, can be held. The main body 104 is most often not completely filled with product, i.a. due to that this could result in spillage when opening such package. Usually, a void space formed inside the main body 104 is referred to as head space 110.

To provide for that the product 108 can be poured out of the package 100 via the opening device 102, a hole 112 may be provided in the main body 104. As illustrated, the opening device 102 can be placed on top of the hole 112 such that the product 108 is shielded from surrounding air when the opening device 102 is closed.

The opening device 102 can comprise a spout 114 provided with threads that is made to interact with a cap 116 provided with corresponding threads, thereby making it possible to open and close the package 100 by screwing or unscrewing the cap 116. The spout 116 may be attached to the main body 104 via a flange 118.

For a consumer to know if the package 100 has been opened or not, a tamper evidence ring 120 may be provided. This ring may be attached to a lower part of the cap 116. To provide for that the cap 114 and the tamper evidence ring 120 can be screwed, or alternatively pushed, onto the spout 114 during production, but thereafter that the cap and the tamper evidence ring are separated when the cap is unscrewed, a protrusion 122 may be provided on the spout 114 and a resilient member 124 may be provided on the tamper evidence ring 120. The protrusion 122 and the resilient member 124 may be designed such that the resilient member 122 may be pushed over the protrusion 122 when the cap 114 is applied for the very first time, but thereafter that the resilient member 124 in combination with the protrusion 122 can be designed to prevent the tamper evidence ring 120 from being removed together with the cap 102, thus resulting in that the two are separated from each other. During separation, connecting members 126 connected originally to both the cap 116 as well as the tamper evidence ring 120 are broken, which provides for that the consumer can easily spot whether or not the package 100 has or has not been opened before.

From a food safety perspective, knowing whether or not the package 100 has been opened before is relevant, and many of the packages sold today are therefore provided with tamper evidence rings, not only carton packages as illustrated in fig. 1. What has not be used before is that a sound produced when opening the package 100, and thereby breaking the connecting members 126, may be captured, analyzed and used for triggering actions in a smart phone or any other electronic device.

Even though a sound produced when breaking the connecting members 126 when unscrewing the cap 116 for the first time is a distinct sound that may be used for triggering the action, there are other sounds produced by the package 100 that also can be used for triggering actions.

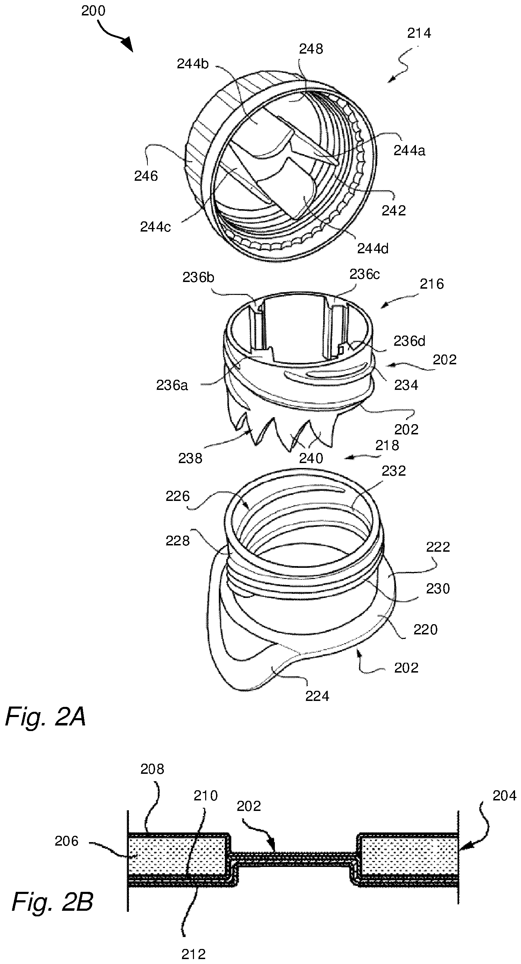

Before continuing discussing how such package produced sounds may be used, another example of an opening device 200 is illustrated. As illustrated in fig. 2A and 2B, the opening device 200 may be designed differently if it is to be used for an aseptic package. Fig. 2A illustrates an example of the opening device 200 and fig. 2B illustrates a so-called pre-laminated hole 202 on top of which the opening device 200 is to be placed.

Starting with fig. 2B, unlike a non-aseptic package, e.g. the package 100 illustrated in fig. 1, the aseptic package is usually not provided with an open hole, but with the pre-laminated hole 202, i.e. a part of a package material 204 in which a carton layer 206, or base layer, is not present. As illustrated in fig. 2B, a number of lamination layers may be used. In the example illustrated, an outer lamination layer 208, a first inner lamination layer 210 and a second inner lamination layer 212 can be used for providing shielding in the aseptic package. Having the pre-laminated hole 202, when opening the aseptic package, the opening device 200 is often designed such that the lamination layers 208, 210, 212 can be cut when the cap is unscrewed.

Fig. 2A illustrates the opening device 200 in further detail. To be able to cut the lamination layers 208, 210, 212, the opening device 200 can comprise three parts; a cap 214, a first connecting means 216 and a second connecting means 218.

The second connecting means 218 can be made to be attached to the packaging material 204 and placed on top of the pre-laminated hole 202. An annular flange 220, similar to the flange 118 of the package 100 illustrated in fig. 1, may be provided. To be able to provide caps of larger diameters, the flange 220 may comprise a first portion 222 arranged to attach to a flat portion of the top of the package and a second portion 224, inclined with respect to the first portion 222, arranged to attach to an inclined portion of the top of the package. A circular spout 226 having a collar 228 may form part of the second connecting means 218 as illustrated. Similar to the package 100 illustrated in fig. 1, the spout 226 may be provided with a first thread 230 on an outside of the spout 226. However, in addition and unlike the package 100 illustrated in fig. 1, the spout 226 may also be provided with a second thread 232 provided on an inside of the spout 226.

The second thread 232 can be arranged to interact with a third thread 234 placed on an outside of the first connecting means 216. To be able to exert a rotational thrust on the first connecting member 216, also referred to as tubular cutter, by using the cap 214 four members 236a-d may be provided in an inside of the first connecting means 216. To cut through the lamination layers in the pre-laminated hole, a cutting section 238 provided with teeth 240 can be provided in a lower end of the first connecting member 216.

The cap 214 can comprise a fourth thread 242 arranged to interact with the first thread 230 of the second connecting means 218. Further, the cap 214 can be provided with acting members 244a-d made to interact with the members 236a-d in the first connecting means 216. To provide for that the product in the package is shielded when the opening device 200 is closed, a lateral wall 246 and an end wall 248 can be provided on the cap 214.

To provide for that the first connecting means 216, i.e. the tubular cutter, is fed downwards when the cap is unscrewed, i.e. fed upwards, the threads are arranged accordingly. This and other aspects of this concept is further elaborated in US 9,487,324 B2.

Even though not illustrated, the opening device 200 illustrated in fig. 2A may comprise the tamper evidence ring 120 presented in relation to the package 100 illustrated in fig. 1.

A sound produced when opening the aseptic package having the opening device 200 can be different from the sound produced when opening the package 100 illustrated in fig. 1. When opening the aseptic package, cutting the lamination layers 208, 210, 212 will produce sound specific to this step. Further, having the acting members 244a-d of the cap 214 interacting with the members 236a-d of the first connecting means 216 may also produce specific sounds. Thus, different adaptations made to the opening devices 102, 200 to facilitate for consumers and/or for assuring food safety will as a side-effect produce sounds that are specific such that different opening devices can be distinguished from each other, but also such that the sounds can be distinguished from surrounding noise.

Sounds produced by the packages do however not have to be linked to the opening of the packages. For instance, shaking the package 100 can produce a sound related to that the product 108 moves around inside the package. Depending on how much of the product 108 that is in the package, different sounds can be produced.

The sounds produced by the package 100 can be captured, analyzed and used for triggering different actions in a smart phone, a game console, a TV set or any other electronic device. There are a number of ways to implement such process and below a number of embodiments are provided by way of example.

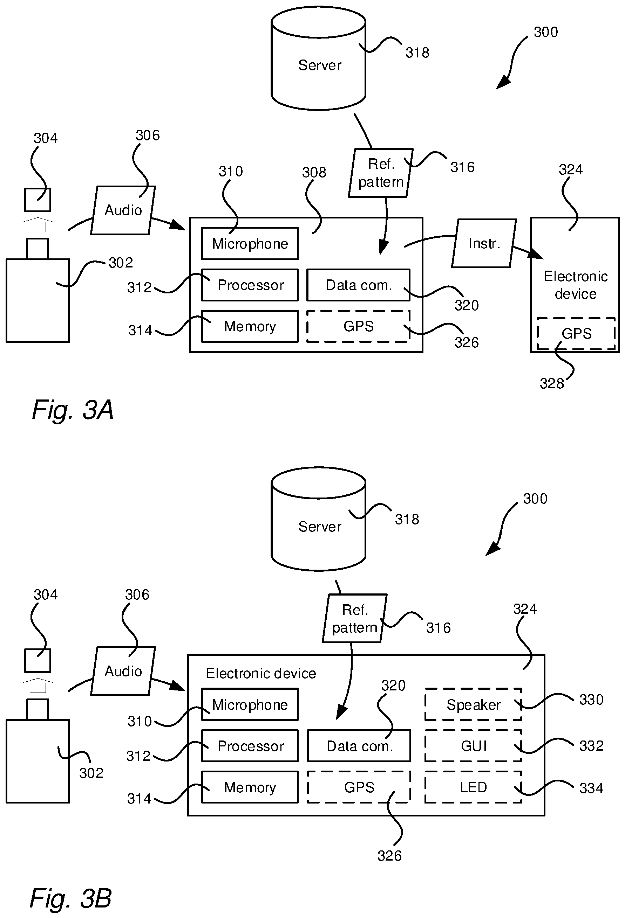

Fig. 3A illustrates a first embodiment in which a system 300 is presented. Using the system 300, once a package 302 is opened, that is, a cap 304 is unscrewed, audio data 306, i.e. the sound produced by the package 302, can be captured by using an apparatus 308 equipped with a microphone 310. The apparatus 308 may be a speaker having a built-in microphone, also known as a digital assistant. The audio data 306 can be processed using a processor 312 and a memory 314 such that the audio data 306 can be compared with a reference pattern 316 that may be received from a server 318 via a data communications module 320 in the apparatus 308. If a comparison of the audio data 306 and the reference pattern 314 results in a match, an action associated with the reference pattern 314 may be initiated. In this first embodiment, this can be made by that instructions 322 is transferred from the apparatus 308 to an electronic device 324. For instance, the digital assistant may recognize that the food package is opened by capturing the audio data, processing this and comparing with the reference pattern 316, and as a result of this send instructions to the smart phone, which is an example of the electronic device 324, to display nutritional information for the product held in the food package. Since there may be a number of different electronic devices linked to the apparatus 308, the apparatus 308 may be provided with a positioning device, such as GPS device 326, and the electronic device 324 may also be equipped with a positioning device, such as a GPS device 328, such that the instructions 322 can be sent to the electronic device 324 placed in a vicinity to the apparatus 308.

An advantage with having the reference pattern 316 stored on the server 318 is that this may be used for a large number of apparatuses. Using this for this large number of apparatuses and provided that feedback is provided to the server 318 may result in that the reference pattern 316 can be continuously and efficiently improved.

Fig. 3B illustrates a second embodiment of the system 300. In this second embodiment the electronic device 324 performs tasks made by the apparatus 308 in the first embodiment such that the apparatus 308 can be left out. For instance, instead of having the digital assistant recognizing that the package 302 is opened and transferring instructions to the smart phone, the smart phone itself can recognize that the package 302 opened. Even though illustrated as different embodiment, the system may use the two embodiments simultaneously, e.g. using both the digital assistant and the smart phone for capturing the sound of the package being opened. Having multiple microphones in different devices may result in that more reliable comparisons of the audio data and the reference pattern can be made.

The electronic device 324 may be equipped with a speaker 330 such that information can be provided to the consumer via audio, a graphical user interface (GUI) 332 such that the information can be transferred via video and/or graphically and/or light emitting diodes (LED) 334 or other lighting sources. By using LEDs 334 a very simple user interface can be provided, e.g. green light for OK to drink, red light for not OK to drink. The electronic device 324 of the first embodiment may also be equipped in the same way even though not illustrated.

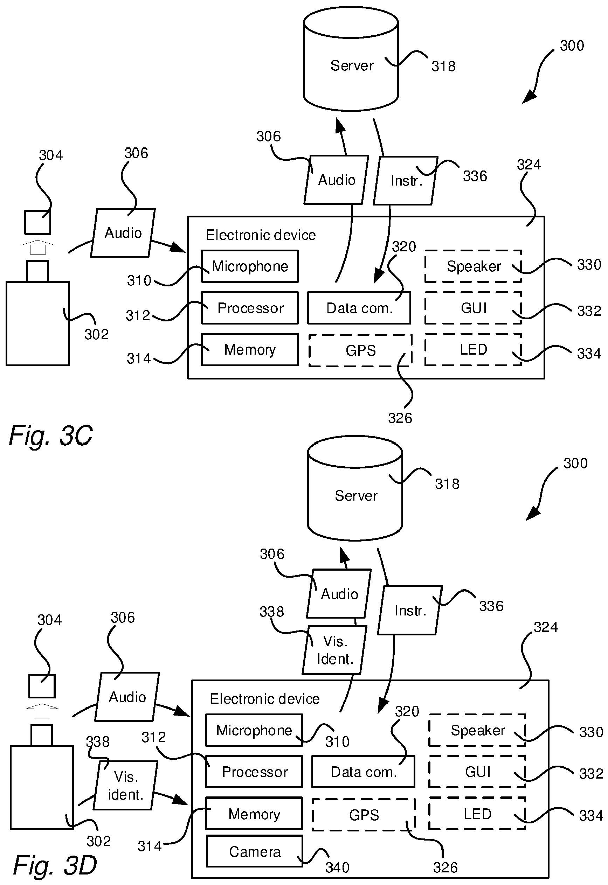

In fig. 3C a third embodiment is illustrated. Unlike the first and second embodiment, in this embodiment the audio data 306 is transferred to the server 318 and the comparison of the audio data 306 and the reference pattern 316 is made in the server 318. Using such set-up has an advantage in that less computational power is needed in the electronic device 324 and/or in the apparatus 308 depending on how the system 300 is set up. Further, transmitting the audio data 306 to the server 318 provides for that Artificial Intelligence (Al) or Machine Learning (ML) software engines can be used efficiently. After having processed the audio data 306 in the server 318, instructions 336 about what actions to perform may be transferred from the server 318 to the electronic device 324.

As can be readily understood, the audio data 306 transferred from the electronic device 324 to the server 318 can be of a different format than the audio data 306 captured by the microphone 310, but for the sake of clarity, sound information generally is referred to as audio data 306 even though representation and format may vary in different steps.

Fig. 3D illustrates a fourth embodiment that is in many aspects similar to the third embodiment. However, unlike the third embodiment, visual identification data 338 can be captured by using a camera 340 comprised in the electronic device 324, e.g. by scanning a two-dimensional code, and transfer the visual identification data 338 to the server 318. By using the visual identification data 338, an identity of the package 302 can be determined. By knowing the identity of the package 302, it is in turn possible to determine a time space in which the product is to be consumed after the package has been opened. For instance, an aseptic carton-based package holding ultra-high temperature (UHT) treated milk can provide a shelf life of twelve months, but when the package is opened the milk should be consumed within about a week. As for the audio data 306, the visual identification data 338 may have different forms and representation in different steps.

Capturing the audio data 306 and the visual identification data 338 may be made sequentially. For instance, in case it can be determined that the package 302 was opened based on the audio data 306, a request may be sent to the consumer being in possession of the electronic device 324 to scan the code of the package 302 such that the visual identification data 338 can be captured. Other alternatives are however also possible. If for instance a refrigerator, in which the package 302 is kept, is provided with cameras, the code of the package 302 may already have been captured by the cameras in the refrigerator. The cameras in the refrigerator may also be configured to detect which package that is taken out from the refrigerator, and provide the visual identification data 338 directly to the electronic device 324.

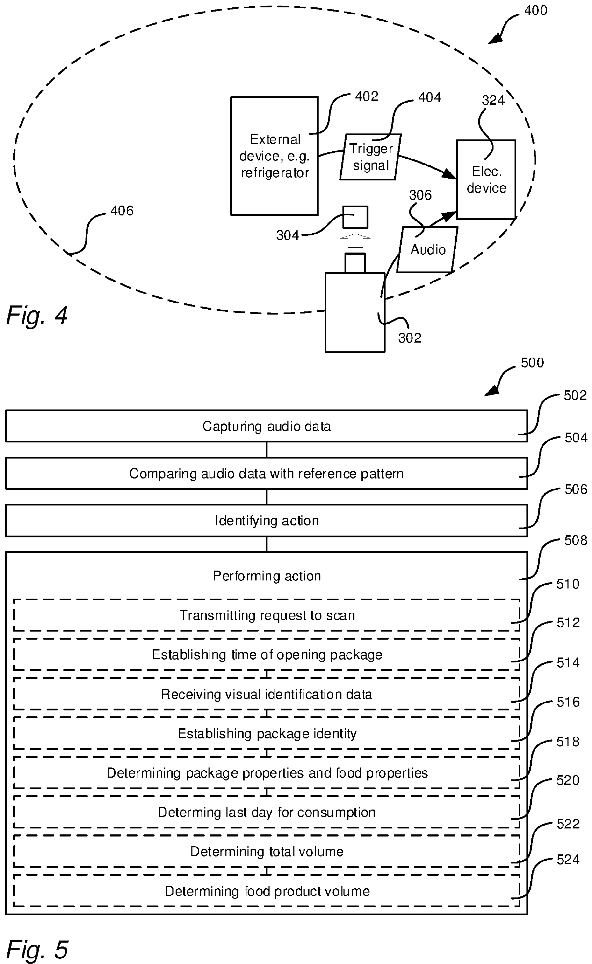

The audio data 306 may be captured continuously, but the capturing may also be triggered by an external device. Fig. 4 illustrates an example of a system 400 in which the step of capturing audio data is initiated by that a refrigerator, which is an example of the external device 402, can transmit a trigger signal 404 to the electronic device 324 such that the step of capturing the audio data 306 may be initiated. The trigger signal 404 may e.g. be transferred when a door of the refrigerator 402 is opened. Another option, if cameras or other sensors are available, the trigger signal 404 may be transferred when the package 302 is registered to be taken out from the refrigerator 402.

Finding that the electronic device 324 is placed within a set area 406 may also result in that the trigger signal 404 is transferred from the refrigerator 402, or any other external device, to the electronic device 324. For instance, if it is detected that the electronic device 324 is placed close to the refrigerator 402, for instance by measuring signal strengths to a number of network nodes, the capturing of the audio data 306 may be initiated. The two approaches - input from the external device, e.g. that the door has been opened, and that the electronic device 324 is detected to be positioned within the set area 406 - may also be combined.

Further, the two approaches may also be used to dynamically set different thresholds. For instance, if the consumer having the electronic device 324 is found to be close to the refrigerator 402, less of a match between the audio data 306 and the reference pattern 316 may be required to accept the comparison to show that the package 302 has been opened 304.

As stated above, even if it is above referred to detecting that the cap 304 is removed from the package 302, this is to be seen as an example. Other examples are shaking the package 302, tearing of a straw bag from the package 302, opening the straw bag, pushing the straw through a pre-perforated hole in the packaging material, releasing bottom flaps glued to a bottom of the package, etc. These different steps may also be combined in different ways.

Regarding the example of shaking the package, this can result in that a remaining volume of product in the package 302 can be determined. The sound of shaking the package is namely different depending on how much product there is in the package. If using reference patterns 316 for different volumes and different types of packages it is thus possible to determine the amount of product in the package. Once having determined the volume left in the package, the action may be in the form of communicating the volume left to the consumer via e.g. electronic device 324.

In fig. 5 a flow chart related to a method 500 for triggering the action in the electronic device is presented. In a first step 502, audio data 306 can be captured. Next, in a second step 504, the audio data 306 can be compared to the reference pattern 316. In case of a match, in a third step 506, the action associated to the reference pattern 316 can be identified. Thereafter, in a fourth step 508, the action can be performed.

The fourth step 508 may comprise a first sub-step 510 of transmitting a request to scan the visual identification data 338. Further, the fourth step 508 may comprise a second sub-step 512 of establishing a time of opening the package 100, 302, a third sub-step 514 of receiving the visual identification data 338, a fourth sub-step 516 of establishing a package identity based on the visual identification data 338, a fifth sub-step 518 of determining package properties and product properties of the product held in the package using the package identity, and a sixth sub-step 520 of determining a last day for consumption based on the food properties, the package properties and the time of opening. If the audio data is produced by shaking the package, the step of performing the action 508 may comprise a seventh sub-step 522 of determining total volume, and an eighth sub-step 524 of determining a food product volume.

From the description above follows that, although various embodiments of the invention have been described and shown, the invention is not restricted thereto, but may also be embodied in other ways within the scope of the subject-matter defined in the following claims.

## Claims

1. A method (500) for triggering an action in an electronic device (324) based on a sound produced by a package, such as a food package (100, 302), said method comprising
capturing (502) audio data (306) related to the sound by using a microphone (310), wherein the step of capturing (502) the audio data is initiated by a trigger signal (404), wherein said trigger signal (404) is effected based on input from an external device (402), such as a refrigerator, and/or a position of the electronic device (324),
comparing (504) the audio data (306) with a reference pattern (316) by using a processor (312) and a memory (314),
in case of match between the audio data (306) and the reference pattern (316), identifying (506) an action associated to the reference pattern (316), and performing (508) the action in the electronic device (324).

2. The method according to claim 1, wherein the sound is related to opening the food package (100, 302) for a first time such that a tamper evidence (120) ring is separated from a cap (116).

3. The method according to claim 1 or 2, wherein the sound is related to opening the food package (100, 302) for the first time such that a laminate layer (208, 210, 212) of a packaging material (204) of the food package (100, 302) is torn.

4. The method according to any one of the preceding claims, wherein the step of performing (508) the action comprises
transmitting (510) a request to scan the food package (100, 302) such that an identity of the food package (100, 302) can be established.

5. The method according to claim 4, wherein the step of performing (508) an action further comprises
establishing (512) a time of opening the package based on time data associated to the audio data,
receiving (514) visual identification data (338) related to the food package,
establishing (516) a package identity based on the visual identification data (338),
determining (518) package properties and food properties of a food product held in the food package using the package identity, and
determining (520) a last day for consumption of the food product based on the food properties, package properties and the time of opening.

6. The method according to claim 1, wherein the sound is produced by shaking the food package (100, 302) such that the food product (108) held inside the food package (100, 302) is moved around within the package (100, 302), and said step of performing (508) the action comprises
determining (522) a total volume of the food package based on the audio data, and
determining (524) a food product volume held inside the food package based on the audio data.

7. An apparatus (108, 324) for triggering an action based on a sound produced by a package, such as a food package (100, 302), said apparatus (108, 324) comprising
a microphone (310) arranged to capture audio data (306) related to the sound,
a server (318) configured to store a reference pattern (316),
a processor (312) and a memory (314) configured to receive a trigger signal (404) and, based upon reception of the trigger signal (404), activate the microphone (310) such the audio data (306) is captured, wherein said trigger signal (306) is effected based on input from an external device (402), such as a refrigerator, and/or a position of the electronic device (324), compare the audio data (306) with the reference pattern (316), identify an action associated to the reference pattern (316), and instruct the electronic device (324) to perform the action.

8. The apparatus according to claim 7, wherein the sound is related to opening the food package for a first time such that a tamper evidence ring (120) is separated from a cap (116).

9. The apparatus according to claim 7 or 8, wherein the sound is related to opening the food package (100, 302) for the first time such that a laminate layer (208, 210, 212) of a packaging material (204) of the food package (100, 302) is torn.

10. The apparatus according to any one of the claims 7 to 9, wherein the action comprises transmitting a request to scan the food package (100, 302) such that an identity of the food package (100, 302) can be established.

11. The apparatus according to claim 10, wherein the processor (312) and the memory (314) are further configured to establish a time of opening the package (100, 302) based on time data associated to the audio data (306), receive visual identification data (338) related to the food package (100, 302), establish a package identity based on the visual identification data (338), determine package properties and food properties of a food product held in the food package (100, 302) using the package identity, and determine a last day for consumption of the food product based on the food properties, package properties and the time of opening.

12. The apparatus according to claim 7, wherein the sound is produced by shaking the food package (100, 302) such that the food product (108) held inside the food package (100, 302) is moved around within the package (100, 302), and the action comprises determining a total volume of the food package based on the audio data, and determining a food product volume held inside the food package based on the audio data (306).

13. A computer program product comprising instructions which, when executed on a computer, cause the computer to carry out the method (500) of any one of the claims 1 to 6.
